# EUROPEAN PATENT APPLICATION

(11) **EP 2 169 868 A1**
(43) Date of publication of application: **31.03.2010**
(21) Application number: 08305617.6
(22) Date of filing: 30.09.2008
(51) Int. Cl.: H04J 14/00

(54) **Methods for optically transferring a data stream via a common medium, systems, data transmitters, and data receivers**

(71) Applicant: Alcatel Lucent, 75008 Paris (FR)
(72) Inventor: Buchali, Fred, 71336 Waiblingen (DE)
(74) Representative: Brose, Gerhard

(57) **Abstract**

The invention relates to a method for optically transferring a first downlink data stream from a downlink data transmitter (OLT) to a first downlink data receiver out of a multiple of downlink data receivers (ONT1, ONT2, ONTn) via a common medium, especially via a passive optical network (CL, BL1, BL2), where the first downlink data stream is processed to a first downlink data signal such that the first downlink data signal uses a predefined limited downlink frequency band (DFB1, DFB2, DFBn-1, DFBn), that the first downlink data signal is combined within the downlink data transmitter (OLT) with at least one further downlink data signal, that uses a frequency range that does not overlap with the predefined limited downlink frequency band (DFB1, DVB2, DFBn-1, DFBn), that the first and the at least one further downlink data signal are transferred optically via the common medium (CL, BL1, BL2), and that the first downlink data receiver filters out the predefined limited downlink frequency band (DFB1,DFB2,DFBn-1, BFBn) and retrieves thereof the first downlink data stream. The invention further relates to a similar method for optically transferring an upstream data stream and to relating systems, data transmitters, and data receivers.

## Description

The invention relates to methods for optically transferring a data stream via a common medium, especially via a passive optical network, according to the preambles of claims 1 and 9, respectively, to systems with a common medium according to the preambles of claims 2 and 10, respectively, to data transmitters according to the preambles of claims 3 and 11, respectimely, and to data receivers according to the preambles of claims 4 and 12, respectively.

Optical fibers are very powerful instruments for transferring whatever data information present in digitized for. But especially the laying of optical cables with optical fibers is cost expensive. That is at least one reason why such fibers mostly are used as a common medium for transferring data streams with different origins or different destinations.

Using a medium containing more than one data stream requires to, on the one hand, combine more than one data stream to a common data flow, and on the other hand to separate the different data streams. Normally combination is made in a time multiplexed manner, while the use of more than one wavelength as carriers for such data flows further increases the capacity of such transmission link. A single data stream thereby is characterized by a combination of a time slot and a wavelength.

In such systems it is a major requirement, that at least the equipment at the downlink end, often a consumer's subscriber equipment, is a low-cost utensil. Both, the synchronization of the time multiplex, and the stabilization of the wavelength, are costly.

The problem is to find a technical solution that principally is less expensive to implement.

This problem according to the invention is solved by a method for optically transferring a downlink data stream via a common medium, especially a passive optical network, according to the teaching of claim 1, by a system according to the teaching of claim 2, by a downlink data transmitter according to the teaching of claim 3, by a downlink data receiver according to the teaching of claim 4 and by an analog method and analog devices for the upstream direction.

The invention is based on the following insight: For various reasons the number of devices at the subscriber's end, commonly called the downlink end, is rather restricted. However the use of a combination of time slots and wavelengths is a solution allowing a much higher degree of multiplexing data streams than required here. When restricting to only one of both kinds of multiplexing, the use of one wavelength per subscriber rather than one time slot is to be preferred. There is no need to deal neither with delays nor with burst synchronization.

Further embodiments of the invention are to be found in the subclaims and the following description.

In the following the invention will be further described with the aid of the accompanying drawings, in which
- Figure 1: shows both, below a system according to the invention, and over it a frequency plan used in a method according to the invention.
- Figure 2: shows the frequency plan of figure 1 alone with a filter curve to be used in one downlink data receiver of the system of figure 1.
- Figure 3: shows the frequency range remaining after applying the filter depicted in figure 2 by its filter curve.
- Figure 4: shows the frequency range of figure 3 after the conversion into the electrical domain.
- Figure 5: shows an example of a block diagram of a data receiver according to the invention.

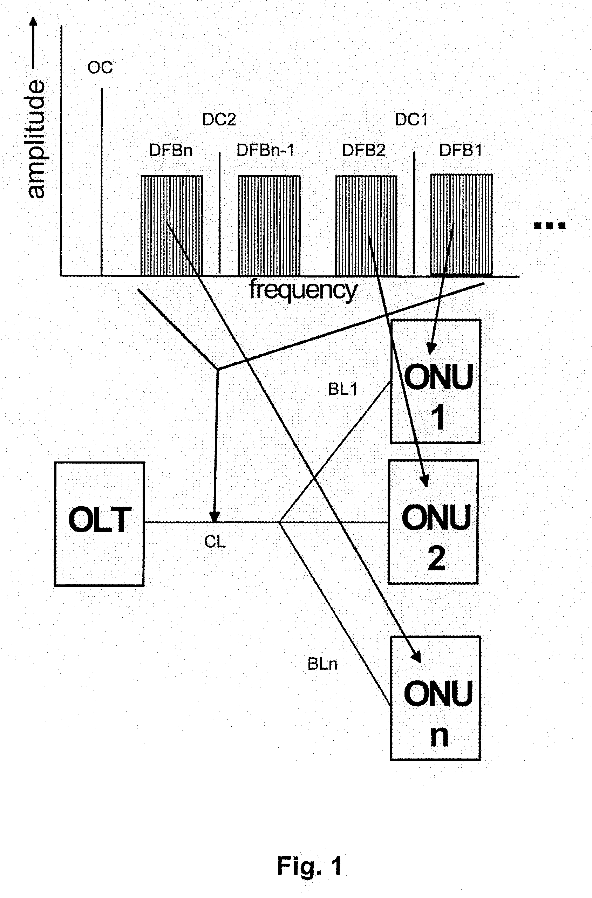

Based on figure 1 first the system is to be described, that is the starting point of this invention and in which the methods of this invention may be applied. To the extend shown in figure 1 the devices according to the invention look like corresponding devices of the prior art (starting point).

An optical line termination OLT is connected to a couple of optical network units ONU1 to ONUn via a common medium, here represented by a common line CL and a couple of branch lines BL1 to BLn.

The common line CL and the couple of branch lines BL1 to BLn are made of optical fibers, bering parts of optical cables. It is not mandatory that all branch lines branch at the same point from the common line, as shown in this schematic figure.

A network like the one shown in figure 1 commonly is called a passive optical network or PON. In contrast to the exact wording of this term sometimes also networks with such structure are called "passive", even when they include active elements like amplifiers or regenerators.

Mainly the invention dealt with the problem of transferring data streams in the downlink direction, that is the direction from a higher level of the network to a lower level of the network, mostly from an access switch or access gateway to the subscribers' equipment. In this case the optical line termination OLT is the access switch or access gateway or a device attached thereto, and the optical network units ONU1 to ONUn are the subscribers' equipments.

The optical line termination OLT here acts as a downlink data transmitter, and the optical network units ONU1 to ONUn act as downlink data receivers.

But the idea underlying the invention is not restricted to be applied in the downlink direction, but can also be applied in the uplink direction.

In the latter case, the optical line termination OLT acts as an uplink data receiver, and the optical network units ONU1 to ONUn act as downlink data transmitters.

The frequency plan given in the top of figure 1 shows the amplitude as a function of the frequency. We see four downlink frequency bands DFB1, DFB2, DFBn-1, and DFBn, two downlink carriers DC1 and DC2, and an optical carrier OC.

This frequency plan is used by the optical line termination OLT when used as a downlink data transmitter. Corresponding signals thus are present on the common line CL as well as on each branch line such as BL1 or BLn. All these signals are also present at the inputs of each and every optical network unit ONU1 to ONUn in the use as downlink data receivers.

According to the invention to each downlink data receiver, at least to each factually in operation, either of these downlink frequency bands is assigned.

For higher traffic more than one downlink frequency band may be assigned to either of the downlink data receivers and for signaling purposes a further downlink frequency band may be ass signed to all or at least a group of downlink data receivers.

The purpose of the optical carrier OC will be explained below.

Each such downlink frequency band now carries one downlink data stream processed such that it occupies the assigned frequency band. As a simple example a single sideband modulation may be applied, using alternately the upper and the lower sideband with respect to a carrier. In the example shown the carriers DC1 and DC2 as such are also present in the frequency band and thus on the common medium and at the inputs of the downlink data receivers. The positions of the carriers DC1 and DC2 with respect to the downlink frequency bands DFB1, DFB2, DFBn-1, and DFBn are to be chosen according to the well-known rules.

The kinds of processing data streams for transmission purposes are well known in the art and not affected by this invention.

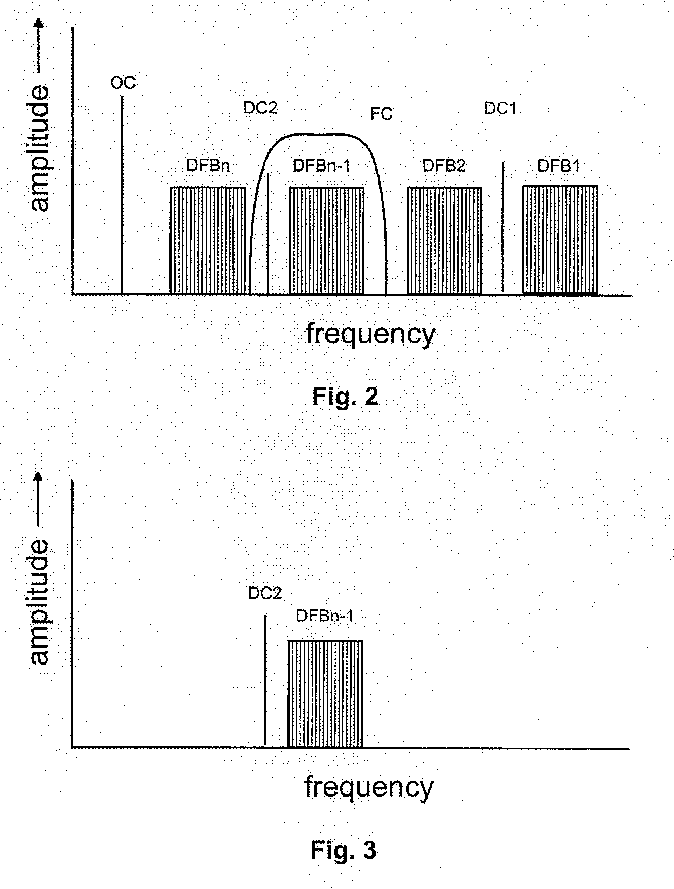

With such assignments of frequency bands to data receivers the retrieval of the respective data streams is easy to handle. As shown in figure 2 a filter with a filter curve FC easily may filter out either of the frequency bands together with the respective carrier, where appropriate.

Either of the downlink, data receivers in the optical network units ONU1 to ONUn after applying a filter as shown in figure 2 now has to cope with a situation as shown in figure 3. This can be achieved with very low-cost devices.

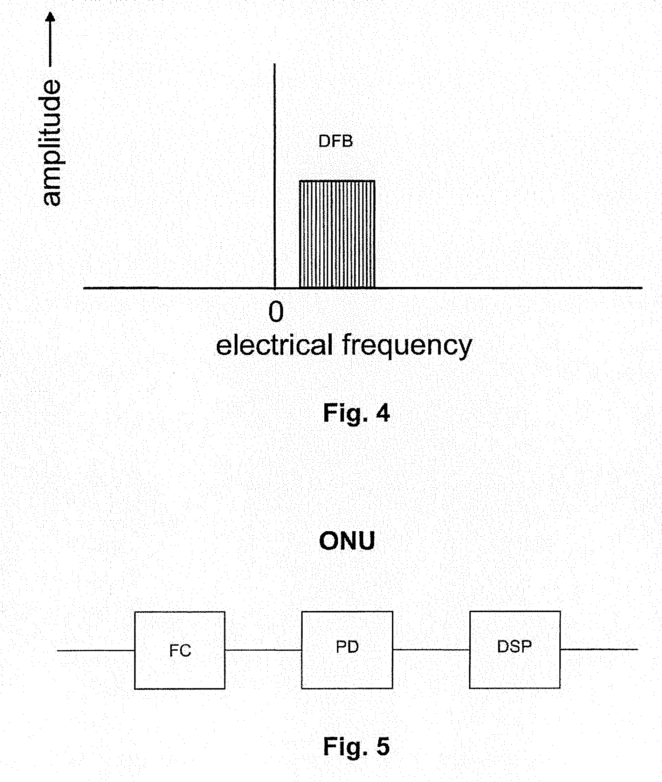

After concerting the signal with the characteristics of figure 3 into the electrical domain we have a characteristic as shown in figure 4. The downlink frequency band DFB now is in the base band range. Each such spectrum is a comb spectrum, the lines representing the different states of the signal in the electrical domain.

An optical network unit ONU according to the invention than may have a simple design as shown in the block diagram of figure 5. An optical filter, denominated with its filter curve FC is followed by a photo diode PD as the most common example of an optical to electrical converter, which in turn is followed by a digital signal processor DSP, here necessarily needing an analog to digital converter at its input. In the special case of so-called offset sideband signals the otherwise complex digital signal processor DSP reduces to a mere one-bit analog-to digital-converter. An offset sideband signal is a single sideband signal with such an offset from its carrier that it directly reaches the operating frequency range or at least an intermediate frequency range.

The filter curve FC, if adjustable, can be set by look up table or an online control can be applied. Either the downlink carrier DC1 or DC2 or a different source can be applied for mixing at the photo diode PD, applying the homodyne or heterodyne principle.

The sampling rate of the analog to digital converter can be downscaled by a factor of 1/n, where n is the overall number of downlink frequency bands, in case the optical network unit ONU receives exactly one downlink frequency band.

When the assigning of frequency bands to network units is fixed, the respective receivers have to handle signals that are continuous in time apart from starting and ending communication sessions. In addition than there is no need to adjust the filter curves. But even this would not call for expensive devices.

It is assumed that the processing of the data streams for transmission via the common medium is performed within the optical line termination OLT, but it could be already be performed ahead of this.

For mass services of course the different data streams are handled in the same way. But the common medium could be used for traffic with other characteristics as well. But care should be taken that otherwise other traffic shall not use the aforementioned frequency bands.

The optical carrier OC represents the (constant) output light of the downlink data transmitter, normally of a laser source. Thereon the downlink frequency bands together with their downlink carriers, provided in the electrical domain, are modulated.

It is easy to see that and how the principles of the invention can be applied also to the uplink direction.

In the uplink direction the same frequency plan may be used as in the downlink direction. Than the carrier signals received in the downlink data receivers can be used also for processing the uplink data streams to uplink data signals. A sending back

## Claims

1. Method for optically transferring a first downlink data stream from a downlink data transmitter (OLT) to a first downlink data receiver out of a multiple of downlink data receivers (ONU1, ONU2, ONUn) via a common medium, especially via a passive optical network (CL, BL1, BLn), **characterized in, that** the first downlink data stream is processed to a first downlink data signal such that the first downlink data signal uses a predefined limited downlink frequency band (DFB1, DFB2, DFBn-1, DFBn), that the first downlink data signal is combined within the downlink data transmitter (OLT) with at least one further downlink data signal, that uses a frequency range that does not overlap with the predefined limited downlink frequency band (DFB1, DFB2, DFBn-1, DFBn), that the first and the at least one further downlink data signal are transferred optically via the common medium (CL, BL1, BLn), and that the first downlink data receiver (ONU1, ONU2, ONUn) filters out (FC) the predefined limited downlink frequency band (DFB1, DFB2, DFBn-1, DFBn) and retrieves (DSP) thereof the first downlink data stream.

2. System with a common medium, especially a passive optical network (CL, BL1, BLn), for transferring a first downlink data stream from a downlink data transmitter (OLT) to a first downlink data receiver out of a multiple of downlink data receivers (ONU1, ONU2, ONUn), **characterized in, that** the downlink data transmitter (OLT) comprises means to combine a first downlink data signal that is processed from the first downlink data stream to said first downlink data signal such that the first downlink data signal uses a predefined limited downlink frequency band (DFB1, DFB2, DFBn-1, DFBn) with at least one further downlink data signal, and to transfer the combined signals optically via the common medium (CL, BL1, BLn), and that the first downlink data receiver (ONU1, ONU2, ONUn) contains means (FC) to filter out the predefined limited downlink frequency band (DFB1, DFB2, DFBn-1, DFBn) and to retrieve (DSP) thereof the first downlink data stream.

3. Downlink data transmitter (OLT) for a system with a common medium, especially a passive optical network (CL, BL1, BLn), for transferring a first downlink data stream from the downlink data transmitter (OLT) to a first downlink data receiver out of a multiple of downlink data receivers (ONU1, ONU2, ONUn), **characterized in, that** the downlink data transmitter (OLT) comprises means to combine a first downlink data signal that is processed from the first downlink data stream to said first downlink data signal such that the first downlink data signal uses a predefined limited downlink frequency band (DFB1, DFB2, DFBn-1, DFBn) with at least one further downlink data signal, and to transfer the combined signals optically via the common medium (CL, BL1, BLn).

4. Downlink data receiver (ONU1, ONU2, ONUn) for a system with a common medium, especially a passive optical network (CL, BL1, BLn), for transferring a first downlink data stream from a downlink data transmitter (OLT) to a first downlink data receiver out of a multiple of downlink data receivers (ONU1, ONU2, ONUn), **characterized in, that** the downlink data receiver contains means (FC) to filter out the predefined limited downlink frequency band (DFB1, DFB2, DFBn-1, DFBn) and to retrieve (DSP) thereof the first downlink data stream.

5. Method according to claim 1, **characterized in, that** a first downlink carrier signal (DC1, DC2) is added to the first downlink data signal, having a predefined position with respect to the predefined limited downlink frequency band (DFB1, DFB2, DFBn-1, DFBn), and that the first downlink carrier signal (DC1, DC2) is used in the first downlink data receiver (ONU1, ONU2, ONUn) to retrieve the first downlink data stream from the downlink data signal contained in the predefined limited downlink frequency band (DFB1, DFB2, DFBn-1, DFBn),

6. Method according to claim 1, **characterized in, that** the processing of the first downlink data stream to said first downlink data signal such that the first downlink data signal uses a predefined limited downlink frequency band (DFB1, DFB2, DFBn-1, DFBn), is performed within the downlink data transmitter.

7. Method according to claim 1, **characterized in, that** the at least one further downlink data signal also uses a predefined limited frequency band (DFB1, DFB2, DFBn-1, DFBn).

8. Method according to claim 1, **characterized in, that** the first downlink data signal is continuous in time.

9. Method for optically transferring a first uplink data stream from a first uplink data transmitter out of a multiple of uplink data transmitters (ONU1, ONU2, ONUn) to a common uplink data receiver (OLT) with the aid of a common medium, especially a passive optical network (CL, BL1, BLn), **characterized in, that** the first uplink data stream is processed to a first uplink data signal such that the first uplink data signal uses a predefined limited uplink frequency band, that further uplink data streams of further uplink data transmitters (ONU1, ONU2, ONUn) out of a multiple of uplink data transmitters are processed such that they use frequency ranges that do not overlap with said predefined limited uplink frequency band, and that the uplink data receiver (OLT) filters out the predefined limited uplink frequency band and retrieves thereof the first uplink data stream.

10. System with a common medium, especially a passive optical network (CL, BL1, BLn), for transferring a first uplink data stream from an uplink data transmitter out of a multiple of uplink data transmitters (ONU1, ONU2, ONUn) to a common uplink data receiver (OLT), **characterized in, that** the first uplink data transmitter (ONU1, ONU2, ONUn) comprises means to optically transfer a first uplink data signal that is processed from the first uplink data stream such that the first uplink data signal uses a predefined limited uplink frequency band to said first uplink data signal to the common uplink data receiver, that the further uplink data transmitters (ONU1, ONU2, ONUn) comprise means to optically transfer further uplink data streams to the common uplink data receiver with the aid of the common medium (CL, BL1, BLn), that the further uplink data streams are processed such that they do not overlap with said predefined limited uplink frequency band, and that the common uplink data receiver (OLT) contains means to filter out the predefined limited uplink frequency band and to retrieve thereof the first uplink data stream.

11. Uplink data transmitter (ONU1, ONU2, ONUn) for a system with a common medium, especially a passive optical network (CL, BL1, BLn), for optically transferring a first uplink data stream from the uplink data transmitter out of a multiple of uplink data transmitters (ONU1, ONU2, ONUn) to a common uplink data receiver (OLT), **characterized in, that** the uplink data transmitter (ONU1, ONU2, ONUn) comprises means to process a first uplink data signal from the first uplink data stream to said first uplink data signal such that said first uplink data signal uses a predefined limited uplink frequency band.

12. Uplink data receiver (out) for a system with a common medium, especially a passive optical network (CL, BL1, BLn), for optically transferring a first uplink data stream from an uplink data transmitter out of a multiple of uplink data transmitters (ONU1, ONU2, ONUn) to the common uplink data receiver (OLT), **characterized in, that** the uplink data receiver (OLT) contains means to retrieve the first uplink data stream out of the predefined limited uplink frequency band.
